# EUROPEAN PATENT APPLICATION

(11) **EP 2 028 069 A2**
(43) Date of publication of application: **25.02.2009**
(21) Application number: 08014553.5
(22) Date of filing: 14.08.2008
(51) Int. Cl.: B60T 8/36

(54) **Hydraulic controller**

(30) Priority: 24.08.2007 JP 2007218743
(71) Applicant: Hitachi Ltd., Chiyoda-ku Tokyo 100-8280 (JP)
(72) Inventor: Matsumoto, Masahiro, Tokyo 100-8220 (JP); Okada, Yasushi, Tokyo 100-8220 (JP); Jeong, Heewon, Tokyo 100-8220 (JP); Sonobe, Hisao, Hitachinaka-shi, Ibaraki 312-8511 (JP)
(74) Representative: Matias, Bruno M.

(57) **Abstract**

A hydraulic controller 1 including a cabinet 2, a hydraulic pipe block 4 having a passage, a linearly driving actuator 5, 6 having a piston 5a, 6a to open and close the passage in the hydraulic pipe block 4, a printed wiring board 3 having a circuit for driving the linearly driving actuator 5,6, and a vibrating angular velocity sensor 9 having two vibrators 10, 11 which can move in a Coriolis force detection direction orthogonal to vibration directions, wherein
the vibrating angular velocity sensor 9 is disposed on the printed wiring board 3 in order that the vibration directions of the vibrators 10, 11 may be substantially parallel to a driving direction of the piston 5a, 6a, and that the Coriolis force detection direction may be substantially orthogonal to the driving direction of the piston 5a, 6a.

## Description

### BACKGROUND OF THE INVENTION

### [Field of the Invention]

The present invention relates to a hydraulic controller and, more particularly, to a hydraulic controller including a vibrating angular velocity sensor.

### [Description of Related Art]

Automobiles are equipped with a brake controller that applies a brake when the automobile runs on a sharply curved road. In the hydraulic controller, when the angular velocity sensor detects that the automobile runs on a sharply curved road, the brake controller controls a hydraulic system to apply a brake for a low-speed operation.

The vibrating angular velocity sensor has two vibrators that vibrate in mutually opposite directions. When the vibrating angular velocity sensor rotates, a Coriolis force is exerted on the vibrators. The Coriolis force is proportional to the rotational angular velocity of the angular velocity sensor. Accordingly, when the Coriolis force is detected, the angular velocity can be determined. Japanese Patent Application Laid-open No. 2006-90737 discloses a structure in which an angular velocity sensor is mounted.
Patent Document 1: Japanese Patent Application Laid-open No. 2006-90737

### SUMMARY OF THE INVENTION

Conventional vibrating angular velocity sensors are most resistant to disturbance vibration in an angular velocity vector direction, followed by disturbance vibration in a direction in which the vibrators vibrate. These angular velocity sensors are most vulnerable to disturbance vibration in a direction in which a Coriolis force is detected, particularly vulnerable to disturbance vibration near a resonant point in a direction in which a Coriolis force is detected.

With an arrangement of a vibrating angular velocity sensor disposed in a conventional hydraulic controller, the vibrating angular velocity sensor is affected by disturbance vibration in the Coriolis force detection direction. Accordingly, when the vibrating angular velocity sensor is subject to disturbance vibration in the Coriolis force detection direction, the vibrating angular velocity sensor is affected, resulting in low detection precision.

An object of the present invention is to provide a hydraulic controller including a vibrating angular velocity sensor is not affected even when the vibrating angular velocity sensor is subject to disturbance vibration in the Coriolis force detection direction.

The hydraulic controller includes a cabinet, a hydraulic pipe block having a passage, a linearly driving actuators having a piston to open and close the passage in the hydraulic pipe block, a printed wiring board having a circuit for driving the linearly driving actuators, and/or a vibrating angular velocity sensor having two vibrators which can move in a Coriolis force detection direction orthogonal to vibration directions.

The vibrating angular velocity sensor is disposed on the printed wiring board in order that the vibration directions of the vibrators may be substantially parallel to a piston driving direction, and that the Coriolis force detection direction may be substantially orthogonal to the piston driving direction.

According to the present invention, the hydraulic controller including a vibrating angular velocity sensor is not affected even when the vibrating angular velocity sensor is subject to disturbance vibration in the Coriolis force detection direction.

### BRIEF DESCRIPTION OF THE DRAWINGS

FIG. 1 illustrates a first embodiment of a hydraulic controller according to the present invention.
FIG. 2 illustrates how a vibrating angular velocity sensor is mounted on a board in the hydraulic controller of this embodiment.
FIG. 3 illustrates a vibration direction, a Coriolis force detection direction, and an angular velocity vector direction detected by the vibrating angular velocity sensor in the hydraulic controller of this embodiment.
FIG. 4 illustrates an exemplary structure of the vibrating angular velocity sensor in the hydraulic controller of this embodiment.
FIG. 5 illustrates a second embodiment of the hydraulic controller according to the present invention.

### DETAILED DESCRIPTION OF THE PREFERRED EMBODIMENTS

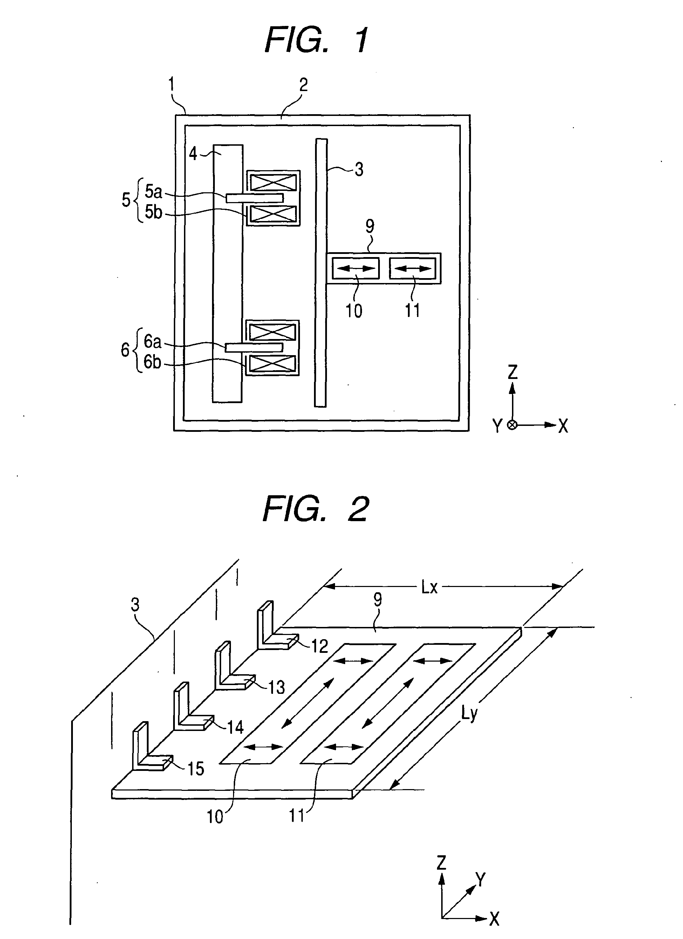

A first embodiment of the hydraulic controller according to the present invention is described with reference to FIG. 1. The hydraulic controller 1 in this embodiment includes a hydraulic pipe block 4 internally having a passage, linearly driving actuators 5 and 6 for controlling the opening and closing of the passage in the hydraulic pipe block 4, a printed wiring board 3, a vibrating angular velocity sensor 9 mounted on the printed wiring board 3, and a cabinet 2.

The passage in the hydraulic pipe block 4 is connected to a hydraulic pipe (not shown) that drives a brake apparatus. The linearly driving actuators 5 and 6 in this embodiment are electromagnet actuators. The linearly driving actuator 5 includes a piston 5a and solenoid valve 5b, and the linearly driving actuator 6 includes a piston 6a and solenoid valve 6b. The pistons 5a and 6a reciprocate in a direction perpendicular to the hydraulic pipe block 4. When the pistons 5a and 6a are protruded, the pipe in the hydraulic pipe block 4 is closed; when the pistons 5a and 6a are retracted, the pipe in the hydraulic pipe block 4 is open.

The vibrating angular velocity sensor 9 is mounted on the printed wiring board 3. The printed wiring board 3 includes a microcomputer and a solenoid valve driving circuit. The microcomputer stores driver software for the solenoid valves. The printed wiring board 3 is connected to the linearly driving actuators 5 and 6 through wires (not shown).

An X axis and a Y axis are drawn on a horizontal plane, and a Z axis is drawn perpendicularly upward. The Y axis is perpendicular to a drawing sheet and the X axis is parallel to the drawing sheet. In this specification, two planes or lines that are mutually orthogonal or perpendicular do not necessarily mean that the angle formed by the two planes or lines must be exactly 90 degrees. It is sufficient that the angle formed by the two planes or lines is approximately 90 degrees; for example, the angle may be larger than 80 degrees and smaller than 100 degrees. Also, two planes or lines that are mutually parallel do not necessarily mean that the angle formed by the two planes or lines must be exactly zero. It is sufficient that the two parallel planes or lines may be approximately parallel; for example, the angle formed by the two planes or lines may be 10 degrees or less. The term "approximately orthogonal", "approximately perpendicular", and "approximately parallel" will be simply called "orthogonal", "perpendicular", and "parallel", respectively.

The hydraulic pipe block 4 is shaped like a plate and disposed perpendicularly, that is, disposed perpendicular to the drawing sheet and parallel to the YZ plane. The printed wiring board 3 is disposed parallel to the hydraulic pipe block 4, that is, disposed perpendicular to the drawing sheet and parallel to the YZ plane.

Since, in this embodiment, the printed wiring board 3 and the hydraulic pipe block 4 are disposed parallel to each other as described above, the size of the hydraulic controller 1 can be reduced. In particular, the dimension of the hydraulic controller 1 in the X direction can be reduced. The vibrating angular velocity sensor 9 has a pair of the vibrator 10 and the vibrator 11.

FIG. 2 illustrates a state in which the vibrating angular velocity sensor 9 is mounted on the printed wiring board 3. The X and Y axes are set on a horizontal plane, and the Z axis is set perpendicularly upward. The vibrating angular velocity sensor 9 is shaped like a rectangular plate. The dimensions of the vibrating angular velocity sensor 9 in the X direction and Y direction will be respectively denoted Lx and Ly. Then, Ly is greater than Lx. The vibrating angular velocity sensor 9 is mounted on the printed wiring board 3 so that the vibrating angular velocity sensor 9 is perpendicular to the printed wiring board 3. Therefore, the vibrating angular velocity sensor 9 is disposed horizontally. One of the longer sides of the vibrating angular velocity sensor 9 is placed on the printed wiring board 3, and the shorter sides of the vibrating angular velocity sensor 9 are perpendicular to the printed wiring board 3.

The vibrating angular velocity sensor 9 is attached to the printed wiring board 3 through leads 12 to 15. The leads are used not only to attach the vibrating angular velocity sensor 9 to the printed wiring board 3 but also to electrically connect wires of the vibrating angular velocity sensor 9 to wires on the printed wiring board 3.

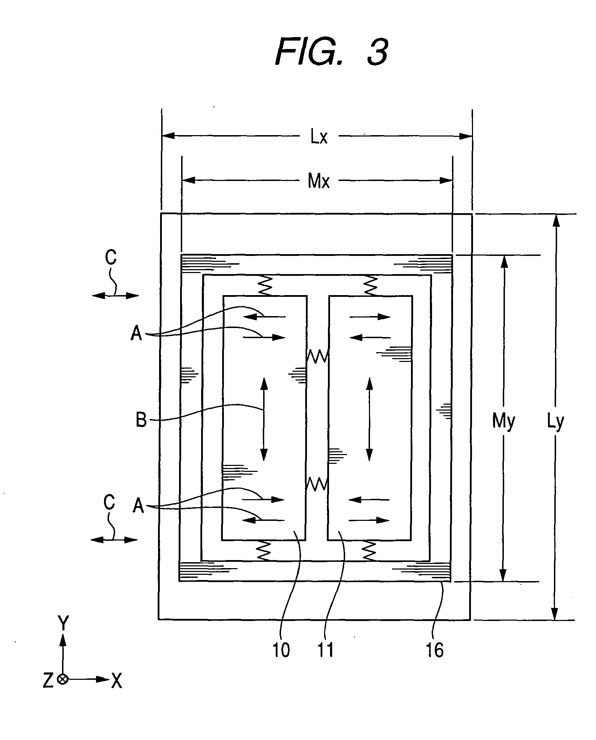

The vibration directions of the vibrators 10 and 11 of the vibrating angular velocity sensor 9, the Coriolis force detection direction, and the angular velocity vector direction will be described with reference to FIG. 3. FIG. 3 schematically illustrates the plane structure of the vibrating angular velocity sensor 9. X and Y axes are set on a drawing sheet and a Z axis is set perpendicular to the drawing sheet, as shown in FIG. 3. The vibrating angular velocity sensor 9 has two vibrators 10 and 11, as described above. The two vibrators 10 and 11 vibrate in the X direction, as indicated by arrows A. That is, the two vibrators 10 and 11 vibrate in mutually opposite directions in the X direction at the same velocity. The two vibrators 10 and 11 can move in the Y direction, as indicated by arrows B. The angular velocity detected by the vibrating angular velocity sensor 9 is a rotational angular velocity around the Z axis. When the vibrating angular velocity sensor 9 rotates around the Z axis, the two vibrators are subject to a Coriolis force in the Y direction and moves in the Y direction. When the amount of movement of each vibrator in the Y direction is detected, the Coriolis force can be determined. The Coriolis force is proportional to the angular speed. Therefore, when a Coriolis force is determined, an angular velocity can then be determined. The determined Coriolis force is in the Y direction.

Suppose that the hydraulic pipe block 4 in this embodiment is mounted in an engine controller. When the vehicle curves to the left, the vibrating angular velocity sensor 9 detects an angular velocity that rotates counterclockwise around the Z axis when viewed from above. When the vehicle curves to the right, the vibrating angular velocity sensor 9 detects an angular velocity that rotates clockwise around the Z axis when viewed from above.

The vibrating angular velocity sensor 9 is usually disposed on a board 16. The dimensions of the board 16 in the X direction and Y direction will be respectively denoted Mx and My. The dimensions of the vibrating angular velocity sensor 9 in the X direction and Y direction are respectively Lx and Ly, as denoted above. Then, My is greater than Mx, and Ly is greater than Lx.

According to this embodiment of the present invention, the pistons of the linearly driving actuators 5 and 6 move in the X direction, as indicated by arrows C. That is, disturbance vibration from the linearly driving actuators 5 and 6 is in the X direction. Therefore, the vibration direction of the disturbance vibration from the linearly driving actuators 5 and 6 is orthogonal to the Coriolis force detection direction (Y direction).

Since the dimension Ly of the vibrating angular velocity sensor 9 in the Coriolis force detection direction is greater than the dimension Lx in the vibration detection direction, the vibrating angular velocity sensor 9 is not affected by the disturbance in the Coriolis force detection direction. According to this embodiment of the present invention, therefore, the vibrating angular velocity sensor 9 can be used to detect an angular velocity with high precision.

Conventional vibrating angular velocity sensors are most resistant to disturbance vibration in the Z direction, followed by disturbance vibration in the X direction. These angular velocity sensors are most vulnerable to disturbance vibration in the Y direction, particularly vulnerable to disturbance vibration near a resonant point in the Y direction.

In this embodiment, the vibration direction (X direction) of disturbance is orthogonal to the Coriolis force detection direction and the dimension Ly of the vibrating angular velocity sensor 9 in the Coriolis force detection direction (Y direction) is prolonged, so the effect of the disturbance vibration can be lessened.

The hydraulic pipe block 4 and the printed wiring board 3 are mutually disposed perpendicular, the cabinet 2 is disposed in a portrait orientation and the hydraulic controller 1 is of a vertical type. The hydraulic controller 1 can then be placed vertically in a narrow space such as the engine room in an automobile.

To lessen the effect by the disturbance vibration, it generally suffices to increase the vibration frequency of the vibrators. When, however, the vibration frequency is higher, the sensitivity of the vibrating angular velocity sensor is lowered.

To prevent the disturbance vibration from being transmitted, a vibration absorbing structure made of, for example, rubber may be used. However, if a vibration absorbing structure is used, the vibrating angular velocity sensor must be enlarged. This embodiment of present invention can detect an angular velocity with high precision without having to increase the vibration frequency and having to use a vibration absorbing structure made of, for example, rubber.

As described above, according to this specification, when two planes or lines are mutually orthogonal, the angle formed by the two planes or lines may be 80 degrees or more and 100 degrees or less. For example, the vibration direction (X direction) of external vibration and the Coriolis force detection direction (Y direction) have been made mutually orthogonal. This means that the two directions may be approximately orthogonal. According to this specification, when two planes or lines are mutually parallel, the angle formed by the two planes or lines may be 10 degrees or less. For example, the vibration direction (X direction) of external vibration and the Coriolis force detection direction (X direction) have been made mutually parallel. This means that the two directions may be approximately parallel.

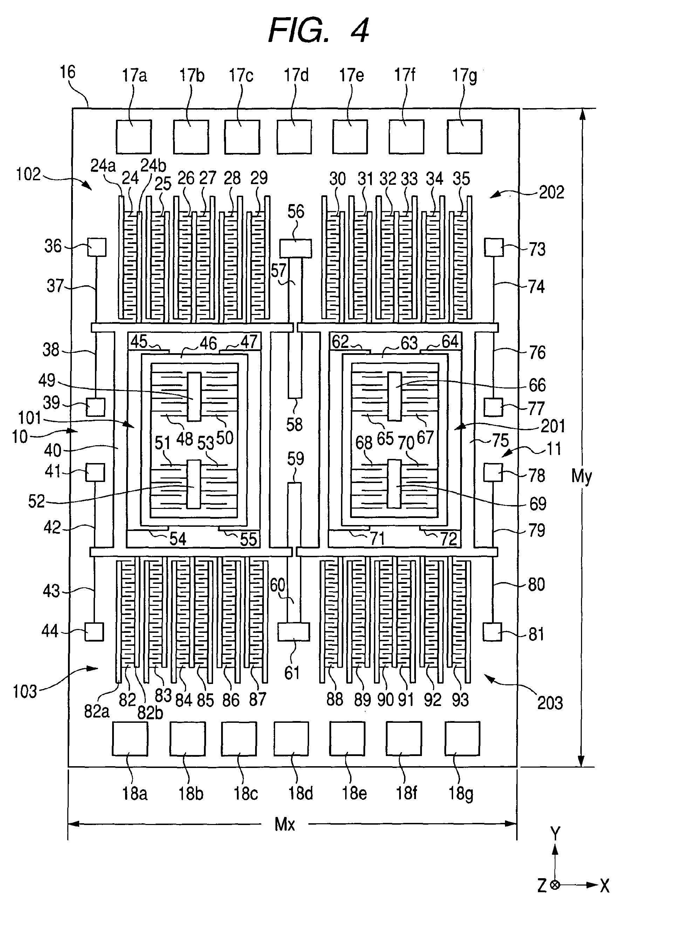

The internal structure of he vibrating angular velocity sensor 9 will be described with reference to FIG. 4. The vibrating angular velocity sensor 9 has, on the board 16, a first vibrator 10, a second vibrator 11, a first displacement detector 101 and a second displacement detector 201, each of which detects a Coriolis force, first driving sections 102 and 103 for driving the first vibrator 10, and second driving sections 202 and 203 for driving the second vibrator 11. The first vibrator 10 and the second detector may have the same structure. The first displacement detector 101 and the second displacement detector 201 may have the same structure. The first driving sections 102 and 103 and the second driving sections 202 and 203 may have the same structure. The first vibrator 10, the first displacement detector 101, and the first driving sections 102 and 103 are described below.

The first vibrator 10 has an external frame 40, which is elastically supported by elastic support beams 37, 38, 42, 43, 57, and 60. The elastic support beams 37, 38, 42, 43, 57, and 60 are elastically supported to the cabinet by anchors 36, 39, 41, 44, 56, and 61, respectively. The external frame 40 of the first vibrator 10 is connected to an external frame 75 of the second vibrator 11 through connection beams 58 and 59.

The first displacement detector 101 has an internal frame 46 disposed in the external frame 40 as well as static electricity detectors 48, 50, 51, and 53 disposed in the internal frame 46. The internal frame 46 is elastically supported to the external frame 40 by connection beams 45, 47, 54, and 55. Accordingly, the external frame 40 can move in the Y direction, relative to the internal frame 46. The static electricity detectors 48 and 50 each have flat electrodes extending from the internal frame 46 and flat electrodes extending from a fixing part 49; the static electricity detectors 51 and 53 each also have flat electrodes extending from the internal frame 46 and flat electrodes extending from a fixing part 52. The flat electrodes extending from the internal frame 46 and the flat electrodes extending from the fixing parts 49 and 52 are disposed so that they are engaged with a clearance between adjacent flat electrodes. Each two adjacent flat electrodes form a fixed clearance without being placed into a contact with each other.

When a Coriolis force is exerted on the first vibrator 10, the external frame 40 moves in the Y direction, relative to the internal frame 46. The clearance between two adjacent flat electrodes then changes. The change in the clearance between the flat electrodes can be detected by detecting a current flowing the flat electrodes. Accordingly, when a current flowing in the flat electrodes is detected, a displacement of the first vibrator 10 in the Y direction, that is, in the Coriolis force detection direction can be detected.

The first driving section 102 has upper electrostatic generators 24, 25, 26, 27, 28, and 29 disposed in an upper frame of the external frame 40; the first driving section 103 has lower electrostatic generators 82, 83, 84, 85, 86, and 87 disposed in a lower frame of the external frame 40. The upper electrostatic generators 24, 25, 26, 27, 28, and 29 each have a comb-shaped electrode extending from a supporting part extending from the upper frame, and also have a comb-shaped electrode extending from a fixing part. For example, the upper electrostatic generator 24 has a comb-shaped electrode extending from a supporting part 24b and a comb-shaped electrode extending from a fixing part 24a.

Similarly, the lower electrostatic generators 82, 83, 84, 85, 86, and 87 each have a comb-shaped electrode extending from a supporting part extending from the lower frame, and also have a comb-shaped electrode extending from a fixing part. For example, the lower electrostatic generator 82 has a comb-shaped electrode extending from a supporting part 82b and a comb-shaped electrode extending from a fixing part 82a.

The comb-shaped electrodes extending from the supporting parts and the comb-shaped electrodes extending from the fixing part are disposed so that they are engaged with a clearance between adjacent flat electrodes. Each two adjacent flat electrodes form a fixed clearance without being placed into a contact with each other.

When a current flows in the comb-shaped electrodes in the electrostatic generator, an attractive force or repulsive force is generated between the two adjacent comb-shaped electrodes. For example, when an attractive force is generated in the electrostatic generator, the vibrator moves toward the fixing part; when a repulsive force is generated in the electrostatic generator, the vibrator moves away from the fixing part. When an attractive force and a repulsive force are alternately generated in the electrostatic generator, the vibrator vibrates in the X direction.

The board 16 includes pads 17a to 17g and 18a to 18g. These pads are electrically connected to the first displacement detector 101 and the comb-shaped electrodes of the first driving sections 102, 103, and also connected to the second displacement detector 201 and the comb-shaped electrodes of the second driving sections 202, 203.

In the vibrating angular velocity sensor 9 in this embodiment, the internal frame 46 is disposed in the external frame 40, so the size of the vibrating angular velocity sensor 9 can be reduced. The upper electrostatic generators 24-29 of the first driving section 102, the lower electrostatic generators 82-87 of the first driving section 103 and the external frame 40 are disposed along the Y direction, and also the upper electrostatic generators 30-35 of the second driving section 202, the lower electrostatic generators 88-93 of the second driving section 203 and the external frame 75 are disposed along the Y direction so the dimension My of the board 16 in this embodiment in the Y direction is longer than its dimension Mx in the X direction.

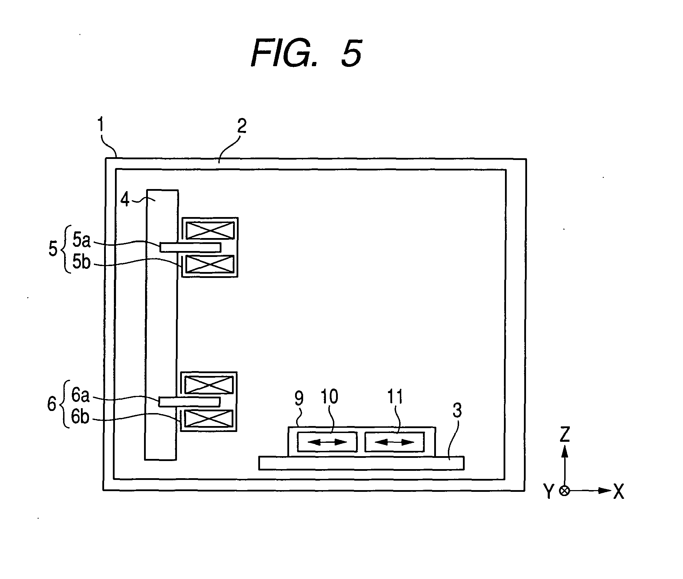

A second embodiment of the hydraulic controller according to the present invention is described with reference to FIG. 5. The hydraulic controller 1 in this embodiment includes a hydraulic pipe block 4 internally having a passage, linearly driving actuators 5 and 6 for controlling the opening and closing of the passage in the hydraulic pipe block 4, a printed wiring board 3, a vibrating angular velocity sensor 9 mounted on the printed wiring board 3, and a cabinet 2. The hydraulic controller in this embodiment differs from the first embodiment in FIG. 1 in the positions where the printed wiring board 3 and the vibrating angular velocity sensor 9 are disposed. The arrangement of the other elements may be the same as in the first embodiment in FIG. 1. The positions of the printed wiring board 3 and the vibrating angular velocity sensor 9 are described below.

An X axis and a Y axis are drawn on a horizontal plane, and a Z axis is drawn perpendicularly upward. The Y axis is perpendicular to a drawing sheet and the X axis is parallel to the drawing sheet. The printed wiring board 3 is disposed horizontally. That is, the printed wiring board 3 is disposed substantially perpendicular to the hydraulic pipe block 4, that is, parallel to the XZ plane. The vibrating angular velocity sensor 9 is disposed on the printed wiring board 3, that is, it is disposed horizontally. In this embodiment, the spatial arrangement of the vibrating angular velocity sensor 9 is the same as in the embodiment shown in FIG. 1.

The vibration directions of the vibrators 10 and 11 of the vibrating angular velocity sensor 9 in this embodiment, the Coriolis force detection direction, and the angular velocity vector direction are as described with reference to FIG. 3. That is, the two vibrators 10 and 11 vibrate in the X direction, the Coriolis force is detected in the Y direction, and the vibrating angular velocity sensor 9 detects a rotational angular velocity around the Z axis.

The present invention has been described by using embodiments. However, it will be easily understood by the person skilled in the art that the present invention is not limited to these embodiments and various modifications can be effected within the scope of the invention as defined in the claims.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A hydraulic controller (1) including a cabinet (2), a hydraulic pipe block (4) having a passage, a linearly driving actuator (5, 6) having a piston (5a, 6a) to open and close the passage in the hydraulic pipe block (4), a printed wiring board (3) having a circuit for driving the linearly driving actuator, and a vibrating angular velocity sensor (9) having two vibrators (10, 11) which can move in a Coriolis force detection direction orthogonal to vibration directions, wherein
the vibrating angular velocity sensor (9) is disposed an the printed wiring board (3) in order that the vibration directions of the vibrators (10, 11) may be substantially parallel to a driving direction of the piston (5a, 6a), and that the Coriolis force detection direction may be substantially orthogonal to the driving direction of the piston (5a, 6a).

2. The hydraulic controller (1) according to claim 1, wherein a dimension of the vibrating angular velocity sensor (9) in the Coriolis force detection direction is larger than a dimension of the vibrating angular velocity sensor (9) in the vibration directions.

3. The hydraulic controller (1) according to claim 1 or 2, wherein the printed wiring board (3) is disposed substantially orthogonally to the driving direction of the piston (5a, 6a).

4. The hydraulic controller (1) according to claim 1 or 2, wherein the printed wiring board (3) is disposed substantially parallel to the driving direction of the piston (5a, 6a).

5. The hydraulic controller (1) according to any of claims 1-4, wherein the driving direction of the piston (5a, 6a) is horizontal, and the Coriolis force detection direction and the vibration directions of the vibrators (10, 11) are also horizontal.

6. The hydraulic controller (1) according to any of claims 1-5, wherein:
the vibrating angular velocity sensor (9) has a driving part (102, 202) for vibrating the vibrator (10, 11) and a displacement detecting part (101, 201) of the vibrator (10, 11) for detecting Coriolis force exerted on the vibrator (10, 11); and
the vibrator (10, 11), the driving part (102, 202), and the displacement detecting part (101, 201) are disposed along the Coriolis force detection direction.

7. The hydraulic controller according to any of claims 1-6, wherein the vibrator (10, 11), the driving part (102, 202), and the displacement detecting part (101, 201) are disposed on a board (16); a dimension of the board (16) in the Coriolis force detection direction is larger than a dimension of the board (16) in the vibration direction.

8. A method of mounting a vibrating angular velocity sensor (9) comprising steps of:
a hydraulic pipe block (4) including a passage is disposed in a cabinet (2), linearly driving actuator (5, 6) having a piston (5a, 6a) to open and close the passage in the hydraulic pipe block (4) is
disposed in the cabinet (2), a printed wiring board (3) having a circuit for driving the linearly driving actuator (5, 6) is disposed in the cabinet (2), a vibrating angular velocity sensor (9) having two vibrators (10, 11) which can move in a Coriolis force detection direction orthogonal to vibration directions is mounted on the printed wiring board (3), and the vibrating angular velocity sensor (9) is disposed on the printed wiring board (3) in order for the vibration directions of the vibrators (10, 11) to be substantially parallel to a driving direction of the piston (5a, 6a), and for the Coriolis force detection direction to be substantially orthogonal to the driving direction of the piston (5a, 6a).

9. The method of mounting a vibrating angular velocity sensor (9) according to claim 8, wherein a dimension of the vibrating angular velocity sensor (9) in the Coriolis force detection direction is larger than a dimension of the vibrating angular velocity sensor (9) in the vibration directions.

10. The method of mounting a vibrating angular velocity sensor (9) according to claim 8 or 9, wherein the printed wiring board 3 is disposed substantially orthogonally to the driving direction of the piston (5a, 6a).

11. The method of mounting a vibrating angular velocity sensor according to claim 8 or 9, wherein the printed wiring board (3) is disposed substantially parallel to the driving direction of the piston (5a, 6a).

12. The method of mounting a vibrating angular velocity sensor (9) according to any of claims 8-11, wherein the driving direction of the piston (5a, 6a) is horizontal, and the Coriolis force detection direction and the vibration directions of the vibrators (10, 11) are also horizontal.
